# DEMANDE DE BREVET EUROPEEN

(11) **EP 3 174 030 A2**
(43) Date de publication de la demande: **31.05.2017**
(21) Numéro de dépôt: 16194983.9
(22) Date de dépôt: 21.10.2016
(51) Int. Cl.: G08G 5/06, G01S 13/91, G01S 13/87, G01S 13/75

(54) **PROCEDE DE DETECTION DE COLLISIONS SUR UNE INSTALLATION AEROPORTUAIRE ET DISPOSITIF POUR SA MISE EN OEUVRE**

(30) Priorité: 25.11.2015 FR 1561366
(71) Demandeur: Airbus (S.A.S.), 31700 Blagnac (FR)
(72) Inventeur: ALONSO TABARES, Diego, 31300 Toulouse (FR)
(74) Mandataire: Gicquel, Olivier Yves Gérard

(57) **Abrégé**

L'invention a pour objet un procédé de détection de collisions entre un objet mobile équipé (22, 24) circulant sur une installation aéroportuaire (10) et au moins un obstacle, le procédé étant caractérisé en ce qu'il comprend les étapes de :
- détermination des positions en temps réel de l'objet mobile équipé (22, 24) dans un référentiel (26) lié à l'installation aéroportuaire (10),
- lecture d'au moins une information contenue dans au moins un marqueur (30) fixé à l'objet mobile équipé (22, 24),
- détermination d'un contour de l'objet mobile équipé (22, 24) à partir de l'information lue contenue dans le marqueur (30),
- positionnement du contour déterminé dans le référentiel (26) lié à l'installation aéroportuaire,
- déclenchement d'une alerte si la distance entre le contour de l'objet mobile équipé (22, 24) et l'obstacle est inférieure à un seuil donné.

## Description

L'invention se rapporte à un procédé de détection de collisions sur une installation aéroportuaire ainsi qu'à un dispositif pour sa mise en oeuvre.

Pour atteindre leurs points de stationnement sur un aéroport, les aéronefs circulent sur des voies de roulage et s'immobilisent à proximité des installations aéroportuaires. Aux points de stationnement, de nombreux véhicules techniques se déplacent autour des aéronefs. Compte tenu du nombre important d'appareils mobiles au sol (aéronefs et véhicules techniques) et de la proximité des installations aéroportuaires, il est nécessaire d'implémenter des solutions pour prévenir les collisions entre un aéronef et un autre aéronef, un véhicule technique ou une partie d'une installation aéroportuaire.

Selon un premier mode de réalisation décrit par exemple dans le document US-7.903.023, l'aéronef comprend au moins un dispositif embarqué de détection de collisions. Ce dispositif embarqué comprend plusieurs radars à ondes millimétriques continues, disposés sur le fuselage et un système de traitement et d'analyse des données générés par le ou les radars. Ce premier mode de réalisation n'est pas pleinement satisfaisant car les radars et le système de traitement et d'analyse des données sont relativement complexes à mettre en oeuvre et sont donc coûteux en terme d'installation et d'exploitation.

Selon un deuxième mode de réalisation, l'aéronef comprend un dispositif embarqué de détection de collisions qui comprend plusieurs caméras et un système d'analyse des images provenant des caméras. Ce deuxième mode de réalisation n'est pas pleinement satisfaisant car le dispositif n'est pas opérationnel lorsque les conditions climatiques sont mauvaises ou durant la nuit.

En complément de ces dispositifs embarqués, une station de contrôle du trafic aérien d'un aéroport comprend un premier radar, dit radar primaire, qui permet de visualiser sur un écran de contrôle des aéronefs en vol dans une zone surveillée de l'aéroport et un deuxième radar, dit radar secondaire, qui utilise le signal des transpondeurs embarqués dans chaque aéronef pour affiner la précision du positionnement de chaque aéronef en vol et au sol. Ainsi, chaque aéronef est représenté sous la forme d'un point associé à un identifiant sur l'écran de contrôle. Lorsqu'un contrôleur détecte sur l'écran de contrôle une situation à risque, il informe le pilote de l'aéronef concerné.

Le document US2009150013 décrit un système comprenant une pluralité de lecteurs répartis dans un aéroport et au moins un avion équipé d'au moins un marqueur. A réception du signal émis par le marqueur et connaissant la position des lecteurs dans l'aéroport, la position de l'avion est déterminée et transmises à un contrôleur aérien afin d'organiser la circulation aéroportuaire.

Le document US2010109936 décrit un système et une méthode anti-collision utilisant un réseau sans fils LAN compatible avec la norme IEEE 802.16e. les positions des éléments mobiles sont déterminées en temps réel grâce aux signaux des transpondeurs. La position de chaque élément fixe est connue dans une base de données. Le système est configuré pour transmettre un signal d'alarme si un risque de collision est déterminé.

Ce procédé de détection de collisions n'est pas pleinement satisfaisant car le contrôleur ne peut pas déterminer le gabarit de l'avion à partir du point figurant sur son écran de contrôle. Sans cette information, les risques de collision sont difficiles à caractériser.

La présente invention vise à remédier aux inconvénients de l'art antérieur.

A cet effet, l'invention a pour objet un procédé de détection de collisions entre un objet mobile équipé circulant sur une installation aéroportuaire et au moins un obstacle dont la position est connue dans un référentiel lié à l'installation aéroportuaire.

Le procédé se caractérise en ce qu'il comprend les étapes de :
- détermination des positions en temps réel de l'objet mobile équipé dans le référentiel lié à l'installation aéroportuaire,
- lecture d'au moins une information contenue dans au moins un marqueur fixé à l'objet mobile équipé et positionné dans un champ de lecture d'au moins un lecteur d'un réseau de lecteurs déployés sur au moins une zone de l'installation aéroportuaire,
- détermination d'un contour de l'objet mobile équipé à partir de l'information lue contenue dans le marqueur,
- positionnement du contour déterminé dans le référentiel lié à l'installation aéroportuaire,
- calcul d'une distance entre le contour de l'objet mobile équipé et l'obstacle,
- déclenchement d'une alerte si la distance calculée est inférieure à un seuil donné.

Le procédé de l'invention associe à chaque objet mobile équipé un contour permettant une meilleure appréhension des risques de collisions.

De préférence, le contour est un cercle dans lequel est inscrit l'objet mobile équipé et l'information lue dans l'unique marqueur fixé à l'objet mobile équipé permet de déterminer le rayon dudit cercle.

Avantageusement, le procédé comprend les étapes de :
- détermination des positions en temps réel d'au moins deux marqueurs fixés à l'objet mobile équipé dans le référentiel lié à l'installation aéroportuaire,
- lecture des informations contenues dans chaque marqueur fixé à l'objet mobile équipé afin de déterminer la position de chaque marqueur dans un référentiel lié à l'objet mobile équipé,
- détermination de l'orientation et du contour réel de l'objet mobile équipé.

Selon une première variante, l'étape de détermination des positions en temps réel de l'objet mobile équipé consiste à déterminer :
- la liste à chaque instant des marqueurs fixés à l'objet mobile équipé présents dans le champ de lecture de chaque lecteur,
- des informations d'horodatage d'entrée et de sortie de chaque marqueur dans les champs de lecture des différents lecteurs,
- par triangulation, la position de chaque marqueur par rapport aux lecteurs,
- par changement de référentiel, la position de chaque marqueur dans le référentiel lié à l'installation aéroportuaire, la position de chaque lecteur étant connue dans le référentiel lié à l'installation aéroportuaire.

Selon une deuxième variante, l'étape de détermination des positions en temps réel de l'objet mobile équipé consiste à déterminer :
- des informations d'horodatage d'entrée et de sortie de chaque marqueur fixé à l'objet mobile équipé dans le champ de lecture d'un lecteur mobile,
- la position en temps réel du lecteur mobile dans le référentiel lié à l'installation aéroportuaire,
- la position des marqueurs par rapport au lecteur mobile,
- par un changement de référentiel, la position de chaque marqueur dans le référentiel lié à l'installation aéroportuaire.

Selon une troisième variante, l'étape de détermination des positions en temps réel de l'objet mobile équipé consiste à déterminer :
- la position de chaque marqueur fixé à l'objet mobile équipé dans le référentiel lié à l'objet mobile équipé,
- la liste des marqueurs fixés à l'objet mobile équipé présents dans le champ de lecture des lecteurs,
- par triangulation, la position de chaque marqueur par rapport aux lecteurs,
- par un changement de référentiel, la position de chaque marqueur dans le référentiel lié à l'installation aéroportuaire, la position des lecteurs étant connue dans le référentiel lié à l'installation aéroportuaire.

L'invention a également pour objet un dispositif de détection de collisions entre un objet mobile équipé circulant sur une installation aéroportuaire et au moins un obstacle dont la position est connue dans un référentiel lié à l'installation aéroportuaire.

Le dispositif de détection de collisions se caractérise en ce qu'il comprend :
- au moins un marqueur fixé à l'objet mobile équipé comprenant au moins un identifiant marqueur,
- un réseau de lecteurs déployés sur au moins une zone de l'installation aéroportuaire, chaque lecteur ayant un champ de lecture et étant configuré pour collecter automatiquement au moins l'identifiant marqueur de chaque marqueur présent dans son champ de lecture,
- une unité de traitement d'information comprenant un logiciel configuré pour :
   ∘ déterminer la position en temps réel de l'objet mobile équipé dans le référentiel lié à l'installation aéroportuaire,
   ∘ déterminer au moins un contour de l'objet mobile équipé,
   ∘ calculer une distance entre le contour de l'objet mobile équipé et l'obstacle,
   ∘ déclencher une alerte si la distance calculée est inférieure à un seuil donné. Dans le cas d'un aéronef, chaque marqueur fixé à un aéronef équipé est configuré pour fonctionner indépendamment d'une alimentation électrique de l'aéronef.

De préférence, un aéronef équipé comprend au moins deux marqueurs distants l'un de l'autre, les marqueurs étant fixes sur l'aéronef équipé et leurs positions connues dans un référentiel lié à l'aéronef équipé.

Avantageusement, un aéronef équipé comprend des marqueurs à chacune des extrémités de la voilure et du fuselage de l'aéronef équipé.

Selon une autre caractéristique, le dispositif comprend une première base de données qui répertorie chaque objet mobile équipé et qui associe, pour chaque objet mobile équipé, un identifiant lié à l'objet mobile équipé et les identifiants marqueurs des marqueurs fixés sur l'objet mobile équipé.

Selon une autre caractéristique, le dispositif comprend une deuxième base de données qui répertorie des obstacles de l'installation aéroportuaire et pour chacun des obstacles son contour et sa position dans le référentiel lié à l'installation aéroportuaire.

Selon une autre caractéristique, le dispositif comprend une troisième base de données qui répertorie, pour chacun des lecteurs, la position du lecteur dans le référentiel lié à l'installation aéroportuaire et le rayon de lecture du lecteur.

Selon une autre caractéristique, le dispositif comprend un système de détermination d'une position en temps réel configuré pour déterminer la position de chaque marqueur dans le référentiel lié à l'installation aéroportuaire.

De préférence, le dispositif comprend un lecteur mobile associé à un moyen pour déterminer la position en temps réel du lecteur mobile dans le référentiel lié à l'installation aéroportuaire.

D'autres caractéristiques et avantages ressortiront de la description qui va suivre de l'invention, description donnée à titre d'exemple uniquement, en regard des dessins annexés sur lesquels :
- La figure 1 est une vue aérienne d'un aéroport qui illustre un mode de réalisation de l'invention,
- La figure 2 est un schéma d'un dispositif de détection d'obstacles qui illustre un mode de réalisation de l'invention,
- La figure 3A est une vue de dessus d'un aéronef qui illustre un premier mode de réalisation de l'invention,
- La figure 3B est une vue de dessus d'un aéronef qui illustre un deuxième mode de réalisation de l'invention,
- La figure 3C est une vue de dessus d'un aéronef qui illustre un troisième mode de réalisation de l'invention,
- La figure 4 est une vue de dessus d'un aéronef se déplaçant sur une installation aéroportuaire qui illustre une première variante d'un dispositif de détection de collisions selon l'invention,
- La figure 5 est une vue de dessus d'un aéronef fixe et d'un lecteur mobile qui illustre une deuxième variante d'un dispositif de détection de collisions selon l'invention,
- La figure 6 est une vue de dessus d'un aéronef immobile à une aire de stationnement qui illustre une troisième variante d'un dispositif de détection de collisions selon l'invention.

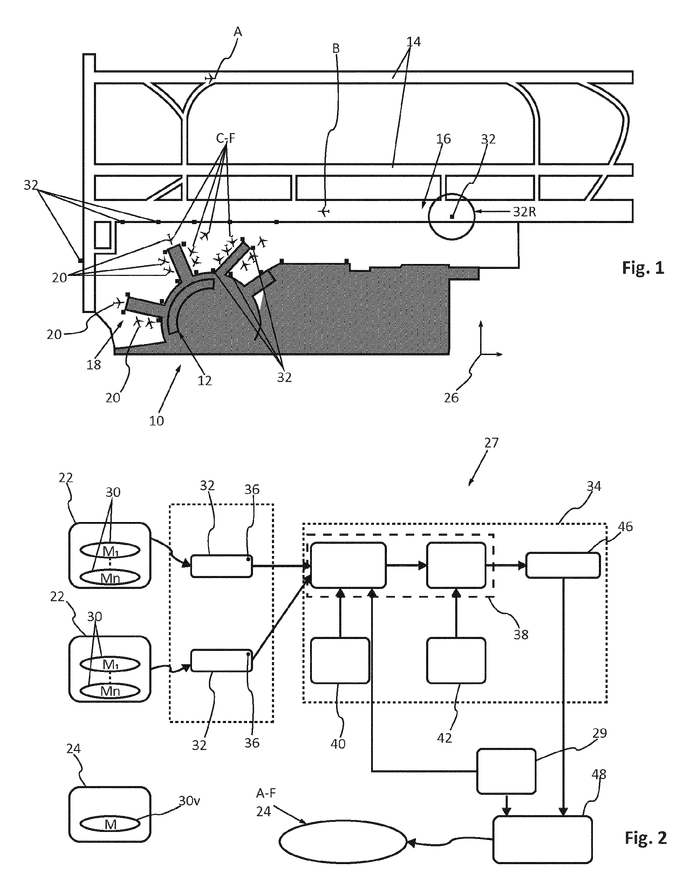

Selon un mode de réalisation illustré par la figure 1, une installation aéroportuaire 10 comprend au moins une aérogare 12, au moins une piste d'atterrissage et/ou de décollage 14, au moins une voie de roulage 16 reliant chaque piste d'atterrissage et/ou de décollage 14 à au moins une zone de stationnement 18.

Une aérogare 12 comprend un ensemble de bâtiments et de parties mobiles qui y sont rattachées comme par exemple les passerelles d'embarquement.

Une zone de stationnement 18 comprend au moins une aire de stationnement 20 qui correspond à un emplacement où stationne un aéronef. Généralement, une zone de stationnement 18 comprend plusieurs points de stationnement 20.

L'installation aéroportuaire 10 comprend un ensemble d'obstacles pour un aéronef, comme par exemple, un bâtiment, une partie mobile rattaché au bâtiment, un bas-côté d'une voie de roulage ou d'une piste d'atterrissage et/ou de décollage, un autre aéronef.

En fonctionnement, des aéronefs A à F se déplacent ou sont immobilisés au sol par rapport aux éléments de l'installation aéroportuaire 10. A titre d'exemple, on a représenté un premier aéronef A qui atterrit sur une piste d'atterrissage et/ou de décollage, un deuxième aéronef B qui roule sur une voie de roulage 16 et des aéronefs C à F immobilisés sur une zone de stationnement 18. Chaque aéronef A à F est identifié par un matricule aéronef contenant au moins une information, telle que le numéro de série de l'aéronef ou le numéro de vol.

En plus des aéronefs A à F, d'autres objets mobiles tels que des véhicules 24 circulent au sol. A titre d'exemple, un véhicule 24 est un camion ravitailleur.

Dans un référentiel 26 associé à l'installation aéroportuaire 10, tout objet mobile (aéronef A à F ou véhicule 24) occupe une position donnée, a une orientation et une vitesse données. Dans le cas d'un objet mobile à l'arrêt, la position et l'orientation sont fixes et la vitesse est nulle. Dans le cas d'un objet mobile en mouvement au sol, la vitesse est différente de 0 et peut évoluer et la position et l'orientation de l'aéronef évoluent en fonction du trajet suivi par l'aéronef.

L'installation aéroportuaire 10 comprend un dispositif de détection de collisions 27.

Le dispositif de détection de collisions 27 comprend au moins un marqueur 30 installé dans ou sur un aéronef, cet aéronef est alors appelé aéronef équipé 22, la position du marqueur 30 étant connue dans un référentiel 33 lié à l'aéronef équipé 22.

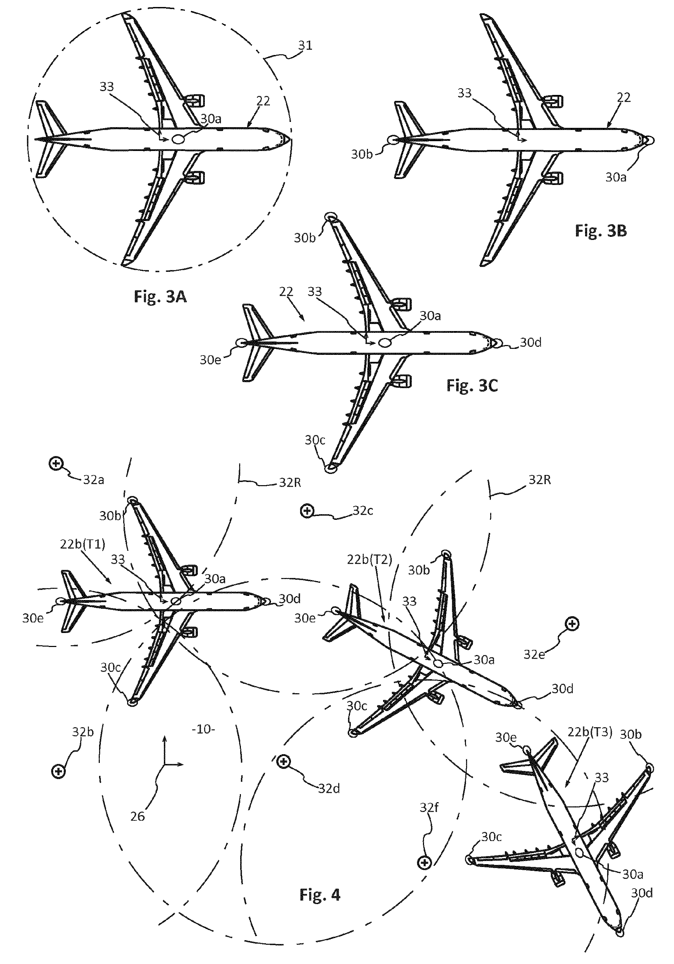

Selon un premier mode de réalisation illustré sur la figure 3A, un aéronef équipé 22 comprend un unique marqueur 30a dont la position est connue dans le référentiel 33 lié à l'aéronef.

Selon un deuxième mode de réalisation illustré sur la figure 3B, un aéronef équipé 22 comprend deux marqueurs 30a et 30b fixés sur l'aéronef équipé 22 et distants l'un de l'autre. Les marqueurs 30a et 30b étant fixes et leurs positions connues dans le référentiel 33 lié à l'aéronef, ces deux marqueurs permettent de déterminer l'orientation de l'aéronef équipé 22. A titre d'exemple, le premier marqueur 30a est positionné au niveau d'une pointe avant de l'aéronef équipé 22 et le second marqueur 30b est positionné au niveau d'une pointe arrière de l'aéronef équipé 22.

Avantageusement, l'aéronef équipé 22 comprend des marqueurs 30a-30e positionnés à chacune des extrémités du fuselage et de la voilure de l'aéronef pour permettre de déterminer plus rapidement le contour de l'aéronef équipé 22.

Selon un troisième mode de réalisation illustré sur la figure 3C, un aéronef équipé 22 comprend cinq marqueurs 30a à 30e, un premier marqueur 30a placé sous l'aéronef équipé 22, au point d'intersection de la voilure et du fuselage de l'aéronef équipé 22, un deuxième marqueur 30b positionné à l'extrémité d'une première aile, un troisième marqueur 30c positionné à l'extrémité d'une seconde aile, un quatrième marqueur 30d positionné au niveau d'une pointe avant de l'aéronef équipé 22 et un cinquième marqueur 30e positionné au niveau d'une pointe arrière de l'aéronef équipé 22.

Chaque marqueur 30 est installé par tout moyen de fixation sur le fuselage de l'aéronef équipé 22. Alternativement, chaque marqueur 30 est installé dans la structure de l'aéronef équipé 22 et n'est pas visible de l'extérieur de l'aéronef équipé 22.

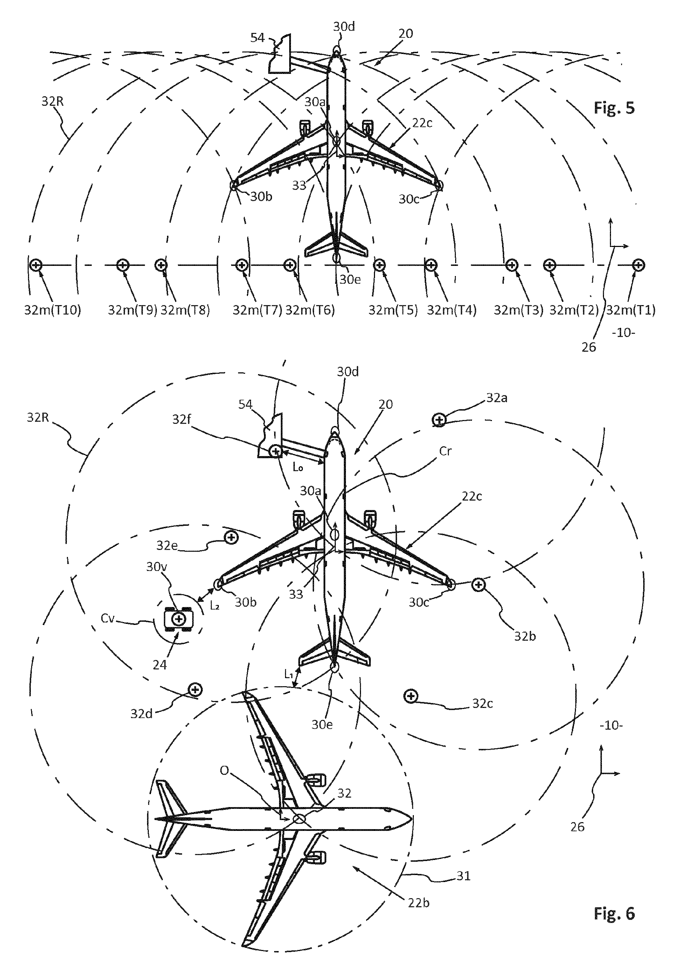

Préférentiellement, d'autres objets mobiles, tel qu'un véhicule 24, peuvent être équipés de la même manière qu'un aéronef équipé 22 et comprendre au moins un marqueur 30 (voir marqueur 30v visible sur la figure 6).

Chaque marqueur 30 comprend au moins un identifiant marqueur qui lui est propre et qui est différent de ceux de tous les autres marqueurs 30. Avantageusement, l'identifiant marqueur comprend une information relative au matricule aéronef.

De préférence, chaque marqueur 30 est passif. Un marqueur 30 est dit passif s'il fonctionne grâce à l'énergie que lui fournit un lecteur. En variante, chaque marqueur 30 comprend sa propre source d'énergie et fonctionne de manière autonome par rapport à l'aéronef équipé 22.

Selon un premier mode de réalisation, chaque marqueur 30 est une puce RFID. Une puce RFID comprend une antenne et une puce électronique qui contient au moins une information, notamment l'identifiant marqueur. De manière automatique, l'information contenue dans la puce électronique est transmise à un lecteur lorsque la puce RFID est positionnée dans une zone de lecture située autour du lecteur.

Selon un autre mode de réalisation, chaque marqueur 30 est une puce de type NFC. Par rapport aux puces RFID, une puce NFC peut transmettre des informations et en recevoir.

Quelle que soit la variante, chaque marqueur 30 est configuré pour fonctionner indépendamment de l'alimentation électrique de l'aéronef équipé 22 et pour communiquer de manière automatique au moins l'identifiant marqueur à un lecteur lorsqu'il est positionné dans le champ de lecture du lecteur.

Avantageusement, en plus de l'identifiant marqueur, chaque marqueur 30 comprend des informations relatives au contour de l'aéronef équipé 22. De préférence, chaque marqueur 30 comprend des informations relatives à la position du marqueur 30 dans le référentiel 33 lié à l'aéronef équipé 22. En variante, chaque marqueur 30 est configuré pour comprendre en plus des informations précédemment citées toute autre information, comme par exemple le nom de la compagnie aérienne, le modèle d'avion, le type de motorisation ou les dimensions (envergure, largeur de fuselage, etc) de l'aéronef équipé 22.

Avantageusement, chaque marqueur comprend une information relative à l'état d'au moins un élément mobile de l'aéronef. A titre d'exemple, l'élément mobile peut être un volet, une ailette. L'état du au moins un élément mobile est représentatif de sa position : déployé, rentré, haut, bas etc...

Lorsqu'un aéronef équipé 22 comprend un unique marqueur 30a, ce dernier peut comprendre en plus de l'identifiant marqueur, la position du marqueur 30a dans le référentiel 33 lié à l'aéronef équipé 22 et le rayon du cercle 31 dans lequel s'inscrit l'aéronef équipé 22. Quel que soit l'aéronef équipé 22, ce dernier comprend un centre qui correspond au centre du cercle 31 dans lequel l'aéronef équipé 22 s'inscrit. La position du centre de l'aéronef équipé 22 est connue dans le référentiel 33 de l'aéronef équipé 22. De préférence, l'origine du référentiel 33 lié à l'aéronef équipé 22 correspond au centre de l'aéronef équipé 22.

Selon une autre caractéristique de l'invention, le dispositif de détection de collisions comprend un réseau de lecteurs 32 de marqueurs, chaque lecteur 32 comprenant un champ de lecture de sorte que chaque marqueur 30 positionné dans le champ de lecture communique avec le lecteur 32.

Avantageusement, comme illustré sur la figure 4, le champ de lecture d'un lecteur 32 est un disque ayant pour centre le lecteur 32 et un rayon de lecture 32R.

Le réseau de lecteurs 32 est déployé sur au moins une zone de l'installation aéroportuaire 10 afin qu'au moins un marqueur 30 de chaque aéronef équipé 22 présent sur l'installation aéroportuaire 10 soit positionné dans le champ de lecture d'au moins un lecteur 32.

A titre d'exemple, les lecteurs 32 sont positionnés en bordure des voies de roulage, sur les bâtiments de l'aéroport, dans les zones de stationnement 18.

Avantageusement, le réseau de lecteurs 32 comprend au moins un lecteur mobile 32m. A titre d'exemple, le lecteur mobile 32m est solidarisé à un véhicule mobile comme par exemple une voiture d'opérations aéroportuaire circulant au sol ou un drone survolant l'installation aéroportuaire 10.

De préférence, le lecteur 32m est associé à un moyen de positionnement pour déterminer sa position en temps réel dans le référentiel 26 lié à l'installation aéroportuaire 10. A titre d'exemple, le lecteur 32m est associé à un capteur GPS ou un transpondeur.

Quelle que soit la variante, chaque lecteur 32 est configuré pour communiquer avec chaque marqueur 30 présent dans son champ de lecture afin de collecter automatiquement au moins l'identifiant marqueur de chaque marqueur 30 présent dans son champ de lecture. En variante, chaque lecteur 32 est configuré pour collecter automatiquement toutes les informations contenues dans chaque marqueur 30 présent dans son champ de lecture. Selon une autre caractéristique de l'invention, comme illustré sur la figure 2, le dispositif de détection de collisions 27 comprend un poste de contrôle 34 et chaque lecteur 32 de marqueur comprend un système de communication 36 configuré pour échanger des informations avec le poste de contrôle 34.

Ce poste de contrôle 34 comprend au moins une première base de données 40 relative aux aéronefs équipés 22 et au moins une deuxième base de données 42 relative à l'installation aéroportuaire 10.

Pour chaque aéronef équipé 22, la première base de données 40 répertorie pour chaque aéronef équipé 22 le matricule de l'aéronef équipé 22 et les identifiants marqueurs des marqueurs 30 fixés sur l'aéronef équipé 22. Ainsi, pour l'aéronef équipé 22 visible sur la figure 3C, la première base de données 40 associe à l'identifiant de l'aéronef équipé 22 les cinq identifiants marqueurs des marqueurs 30a à 30e fixés à l'aéronef équipé 22.

Selon une autre variante, la première base de données 40 associe à chaque matricule aéronef des informations relatives au contour de l'aéronef équipé 22, comme par exemple le rayon du cercle dans lequel est inscrit l'aéronef équipé 22, des informations relatives aux marqueurs 30 présents sur l'aéronef équipé 22, et pour chaque identifiant marqueur associé au matricule aéronef des informations relatives à la position du marqueur 30 dans le référentiel lié à l'aéronef équipé 22.

Ainsi, les informations relatives au contour de l'aéronef équipé 22 et/ou les informations relatives à la position de chaque marqueur 30 dans le référentiel 33 lié à l'aéronef équipé 22 sont contenues soit dans chaque marqueur 30, soit dans la première base de données 40 ou soit dans les deux.

Avantageusement, quelle que soit la variante, la première base de données 40 comprend des informations relatives aux véhicules 24 équipés.

La deuxième base de données 42 répertorie l'ensemble des obstacles de l'installation aéroportuaire 10 et pour chacun d'eux son contour et sa position dans le référentiel 26 lié à l'installation aéroportuaire 10.

De préférence, le poste de contrôle 34 comprend une troisième base de données qui peut être la première ou deuxième base de données 40 ou 42 et qui répertorie, pour chacun des lecteurs 32 du réseau, la position du lecteur 32 dans le référentiel 26 lié à l'installation aéroportuaire 10 et son rayon de lecture 32R.

Le dispositif de détection de collisions comprend également un système de détermination d'une position en temps réel 29 de chaque aéronef équipé 22 présent sur l'installation aéroportuaire 10.

De préférence, le système de détermination d'une position en temps réel 29 est configuré pour déterminer la position de chaque marqueur 30 dans le référentiel 26 lié à l'installation aéroportuaire 10.

Selon une première variante du dispositif de détection de collisions, le système de détermination d'une position en temps réel 29 comprend un moyen de calcul pour déterminer la position en temps réel de chaque marqueur 30 à partir de la position de chaque lecteur 32 dans le référentiel 26 lié à l'installation aéroportuaire 10, du rayon de lecture de chaque lecteur 32, de la liste à chaque instant des marqueurs 30 présents dans le champ de lecture de chaque lecteur 32 et des informations d'horodatage d'entrée et de sortie de chaque marqueur 30 dans le champs de lecture de chaque lecteur 32.

En référence à la figure 4, un aéronef équipé 22b est mobile sur l'installation aéroportuaire 10 et occupe successivement différentes positions dans le réseau de lecteurs 32, dont six lecteurs 32a-32f sont représentés ici. A titre d'exemple, l'aéronef équipé 22b comprend cinq marqueurs 30a-30e. Sur la figure 4, l'aéronef équipé 22b est représenté dans une première position référencée 22b(T1) à un instant T1, une deuxième position référencée 22b(T2) à un instant T2 et une troisième position 22b(T3) à un instant T3.

Chaque lecteur 32a-32f identifie, en temps réel et en continu, chaque marqueur 30a-30e présent dans son champ de lecture. De plus, pour chaque marqueur 30a-30e, des informations d'horodatage d'entrée et de sortie dans le champ de lecture de chaque lecteur 32a-32f sont enregistrées dans les lecteurs 32a-32f.

Selon une deuxième variante du dispositif de détection de collisions, le système de détermination d'une position en temps réel 29 comprend un moyen de calcul pour déterminer la position en temps réel de chaque marqueur 30 à partir de la position en temps réel du lecteur mobile 32m, du rayon de lecture 32R du lecteur 32m et des informations d'horodatage d'entrée et de sortie de chaque marqueur 30 dans le champ de lecture du lecteur mobile 32m.

En référence à la figure 5, un aéronef équipé 22c est immobile à une aire de stationnement 20 de l'installation aéroportuaire 10 et un lecteur mobile 32m occupe différentes positions T1 à T10 dans le référentiel 26 lié à l'installation aéroportuaire 10. A titre d'exemple, l'aéronef équipé 22b comprend cinq marqueurs 30a-30e. Les positions T1 à T5 du lecteur mobile 32m correspondent aux positions du lecteur mobile 32m lorsque l'un des marqueurs 30a à 30e entre dans le champ de lecture du lecteur mobile 32m et les positions T6 à T10 du lecteur mobile 32m correspondent aux positions du lecteur mobile 32m lorsque l'un des marqueurs 30a à 30e sort du champ de lecture du lecteur mobile 32m

Selon une troisième variante du dispositif de détection de collisions, le système de détermination d'une position en temps réel 29 comprend un moyen de calcul pour déterminer la position en temps réel de chaque marqueur 30a-30e à partir des positions connues de chaque lecteur 32a-32f, du rayon de lecture 32R de chaque lecteur 32a-32f, de la liste des marqueurs 30a-30e présents dans le champ de lecture de chaque lecteur 32a-32f et de la position de chaque marqueur 30a-30e dans le référentiel 33 lié à l'aéronef équipé 22.

En référence à la figure 6, un aéronef équipé 22c est immobile à une aire de stationnement 20 de l'installation aéroportuaire 10, plusieurs lecteurs 32 étant installés sur des éléments de l'installation aéroportuaire 10 présents dans l'aire de stationnement. La position de chaque lecteur 32 est connue dans le référentiel 26 lié à l'installation aéroportuaire 10. A titre d'exemple, l'aéronef 22c comprend cinq marqueurs 30a-30e et six lecteurs 32a-32f sont installés sur des éléments de l'installation aéroportuaire 10 présents dans l'aire de stationnement 20.

Chaque lecteur 32a-32f identifie les marqueurs 30a- 30e présents dans son champ de lecture.

Ainsi, le lecteur 32a identifie les marqueurs 30a, 30d, 30c dans son champ de lecture, le lecteur 32b identifie les marqueurs 30a, 30c 30e dans son champ de lecture, le lecteur 32c identifie les marqueurs 30c, 30e dans son champ de lecture, le lecteur 32d identifie les marqueurs 30b, 30e dans son champ de lecture, le lecteur 32e identifie les marqueurs 30a, 30b, 30d, 30e dans son champ de lecture, le lecteur 32f identifie les marqueurs 30a, 30b, 30d dans son champ de lecture.

Quelle que soit la variante, le système de détermination de la position en temps réel 29 est configuré pour déterminer en temps réel la position de chaque objet mobile équipé dans le référentie I 26 lié à l'installation aéroportuaire 10 et pour associer à cette position un identifiant propre à chaque objet mobile.

Avantageusement, le système de détermination de la position en temps réel 29 est configuré pour déterminer la position en temps réel de tout objet mobile sur l'installation aéroportuaire, comme par exemple un aéronef équipé 22 d'au moins un marqueur 30, un aéronef non équipé A à F, une voiture d'opérations aéroportuaires, un drone. Selon un mode de réalisation, le système de détermination d'une position en temps réel 29 comprend un premier radar, dit radar primaire, et/ou un deuxième radar, dit radar secondaire, le radar secondaire étant configuré pour utiliser un signal émis par un moyen de positionnement, tel qu'un transpondeur, embarqué dans l'objet mobile.

Le poste de contrôle 34 comprend au moins un système de communication 46 pour transmettre l'alerte.

Selon une première variante, le système de communication 46 est configuré pour transmettre l'alerte directement à l'objet mobile concerné, aux deux éléments mobiles concernés par le risque de collision.

Selon une deuxième variante, le système de communication 46 est configuré pour transmettre l'alerte à une station de contrôle du trafic aérien 48 qui la relaie à l'objet mobile concerné, aux deux éléments mobiles concernés par le risque de collision.

Le poste de contrôle 34 comprend également une unité de traitement d'information 38 qui comprend au moins un logiciel configuré pour :
- déterminer la position en temps réel de chaque objet mobile (aéronef/véhicule équipé ou non équipé, en mouvement ou à l'arrêt) dans le référentiel 26 lié à l'installation aéroportuaire 10,
- déterminer au moins le contour des éléments mobiles 22a-22f et 24 équipés et de préférence leur orientation,
- calculer une distance entre deux éléments mobiles et entre un objet mobile et un obstacle de l'installation aéroportuaire 10, et
- déclencher une alerte si la distance déterminée est inférieure à un seuil donné.

Avantageusement, le dispositif de détection de collisions selon l'invention est mis en oeuvre dans un procédé de détection de collisions. Le procédé de détection de collisions peut s'appliquer à tout objet mobile équipé circulant au sol sur l'installation aéroportuaire 10, comme un aéronef équipé 22 ou un véhicule 24.

Chaque lecteur 32 collecte, en temps réel et en continu, de manière automatique, les informations contenues dans les différents marqueurs 30 présents dans son champ de lecture et les transmet à l'unité de traitement d'information 38 du poste de contrôle 34.

En parallèle, le système de détermination de la position en temps réel 29 détermine la position et l'identifiant de chaque objet mobile circulant sur l'installation aéroportuaire 10. Ces informations déterminées en temps réel sont transmises à l'unité de traitement d'information 38 du poste de contrôle 34.

Les éléments mobiles non équipés de marqueur sont géolocalisés grâce à tout moyen de positionnement connu tel qu'un transpondeur ou un capteur GPS.

Les éléments mobiles équipés sont géolocalisés à partir de la position du ou des marqueurs 30 les équipant et en utilisant au moins l'une des première, deuxième ou troisième variantes pour déterminer la position en temps réel de chaque marqueur 30.

Selon une première variante du procédé de détermination de la position des marqueurs fixés sur un objet mobile, l'unité de traitement d'information 38 détermine par triangulation la position de chaque marqueur 30 par rapport aux lecteurs 32 en utilisant le rayon de lecture 32R de chaque lecteur 32, la liste à chaque instant des marqueurs 30 présents dans le champ de lecture de chaque lecteur 32 et des informations d'horodatage d'entrée et de sortie de chaque marqueur 30 dans les champs de lecture des différents lecteurs 32. La position de chaque lecteur 32 étant connue dans le référentiel 26 lié à l'installation aéroportuaire 10 d'après la deuxième base de données 42, l'unité de traitement d'information 38 détermine par un changement de référentiel la position de chaque marqueur 30 dans le référentiel 26 lié à l'installation aéroportuaire 10.

Selon une deuxième variante du procédé de détermination de la position des marqueurs fixés sur un élément mobile, l'unité de traitement de traitement d'information 38 détermine la position des marqueurs 30 par rapport à au moins un lecteur mobile 32m, en utilisant le rayon de lecture 32R du lecteur mobile 32m et des informations d'horodatage d'entrée et de sortie de chaque marqueur 30 dans le champ de lecture du lecteur mobile 32m. La position du lecteur mobile 32m étant connue en temps réel dans le référentiel 26 lié à l'installation aéroportuaire 10, l'unité de traitement d'information 38 détermine par un changement de référentiel la position de chaque marqueur 30 dans le référentiel 26 lié à l'installation aéroportuaire 10.

Selon une troisième variante du procédé de détermination de la position des marqueurs fixés sur un objet mobile, l'unité de traitement d'information 38 détermine par triangulation la position de chaque marqueur 30 par rapports aux lecteurs 32 en utilisant le rayon de lecture 32R de chaque lecteur 32, de la liste des marqueurs 30 présents dans le champ de lecture des lecteurs 32 et de la position des marqueurs 30 dans le référentiel 33 lié à l'objet mobile. La position de chaque lecteur 32 étant connue dans le référentiel 26 lié à l'installation aéroportuaire 10 d'après la deuxième base de données 42, l'unité de traitement d'information 38 détermine par un changement de référentiel la position de chaque marqueur 30 dans le référentiel 26 lié à l'installation aéroportuaire 10.

Quelle que soit la variante, pour chaque objet mobile équipé 22 ou 24, connaissant la position de chaque marqueur 30 dans le référentiel 33 lié à l'objet mobile équipé 22 ou 24 et la position de chaque marqueur 30 dans le référentiel 26 lié à l'installation aéroportuaire 10, l'unité de traitement de l'information 38 détermine la position de chaque objet mobile équipé 22 ou 24, notamment son centre.

La position de l'objet mobile équipé 22 ou 24 dans le référentiel 26 lié à l'installation aéroportuaire 10 déterminée grâce aux procédés de détermination de la position des marqueurs 30 peut être corroborée par la position déterminée à l'aide du transpondeur dans le cas d'un objet mobile qui se déplace ou par la dernière position connue déterminée à l'aide du transpondeur dans le cas d'un objet mobile à l'arrêt.

Connaissant la position de chaque objet mobile équipé 22 ou 24 dans le référentiel 26 lié à l'installation aéroportuaire 10, l'unité de traitement de l'information 38 détermine le contour de chaque objet mobile équipé 22 ou 24 dans le référentiel 26 lié à l'installation aéroportuaire 10.

Pour les éléments mobiles non équipés de marqueur 30, ce contour correspond à un cercle Cv dans lequel est inscrit l'objet mobile.

Pour un objet mobile équipé d'un seul marqueur 30, comme l'aéronef 22b illustré sur la figure 6, le contour de l'objet mobile équipé 22b correspond à un cercle 31 centré par rapport au centre O de l'objet mobile équipé 22b. Connaissant la position du centre O de l'objet mobile équipé 22b et le rayon du cercle 31 à partir des informations contenues dans la première base de données 40 et/ou dans le marqueur 30, l'unité de traitement de l'information 38 détermine la position du cercle 31 dans le référentiel 26 lié à l'installation aéroportuaire 10.

Pour un objet mobile équipé de plusieurs marqueurs 30, comme l'aéronef 22c équipé de marqueurs 30a-30e illustré sur la figure 6, le contour de l'objet mobile correspond au contour réel Cr de l'objet mobile équipé 22.

Connaissant la position d'au moins deux marqueurs 30a-30e de l'objet mobile équipé 22c dans le référentiel 26 lié à l'installation aéroportuaire 10 et la position de ces deux marqueurs 30a-30e dans le référentiel 33 lié à l'objet mobile à partir des informations contenues dans la première base de données 40 et/ou dans les marqueurs 30a-30e, l'unité de traitement de l'information 38 détermine la position et l'orientation de l'objet mobile 22c puis la position du contour Cr dans le référentiel 26 lié à l'installation aéroportuaire 10. Pour chaque objet mobile équipé, l'unité de traitement d'information 38 détermine la distance entre son contour positionné dans le référentiel 26 lié à l'installation aéroportuaire 10 et au moins un obstacle avoisinant dont la position est connue dans le référentiel 26 lié à l'installation aéroportuaire. De manière générale, un obstacle peut être un obstacle de l'installation aéroportuaire 10, un autre aéronef ou un autre véhicule.

Dans le cas de l'aéronef 22c visible sur la figure 6, l'unité de traitement d'information 38 détermine :
- la distance L0 entre un bâtiment 54 dont la position est connue dans le référentiel 26 d'après la deuxième base de données 42 et le contour Cr de l'aéronef 22c comme précédemment déterminé,
- la distance L1 entre le contour Cr de l'aéronef 22c et le cercle 31 de l'aéronef 22b,
- la distance L2 entre le contour Cr de l'aéronef 22c et le contour Cv du véhicule 24, Enfin, si l'une des distances calculées est inférieure à un seuil donné, l'unité de traitement d'information 38 déclenche une alerte.

Le dispositif de détection de collisions permet de détecter tous les aéronefs et les véhicules, de déterminer leurs positions, d'anticiper leurs trajectoires, de déterminer les risques de collision et de déclencher une alerte en cas de risques de collision.

Il permet notamment de limiter les risques d'incidents à basse vitesse à l'approche des points de stationnement ou lors des opérations de repoussage.

Le dispositif de détection de collisions fonctionne quelles que soient les conditions météorologiques.

De plus, il permet de déterminer avec une précision élevé la position de chaque objet mobile équipé d'au moins un marqueur même si l'objet mobile équipé n'est pas alimenté en énergie.

Enfin, le dispositif de détection de collisions peut être déployé à moindre coût, les marqueurs et les lecteurs ayant des coûts réduits.

## Revendications

1. Procédé de détection de collisions entre un objet mobile équipé (22, 24) comprenant une pluralité de marqueurs (30) et circulant sur une installation aéroportuaire (10) et au moins un obstacle dont la position est connue dans un référentiel (26) lié à l'installation aéroportuaire (10), le procédé étant **caractérisé en ce qu'**il comprend les étapes de :
- détermination des positions en temps réel de l'objet mobile équipé (22, 24) dans le référentiel (26) lié à l'installation aéroportuaire (10),
- lecture d'au moins une information contenue dans les marqueurs (30) fixés à l'objet mobile équipé (22, 24) et positionnés dans un champ de lecture d'au moins un lecteur (32) d'un réseau de lecteurs déployés sur au moins une zone de l'installation aéroportuaire (10), chaque marqueur (30) comprenant des informations relatives à la position du marqueur (30) dans un référentiel lié à l'objet mobile équipé
- détermination d'un contour de l'objet mobile équipé (22, 24) à partir des informations lues,
- positionnement du contour déterminé dans le référentiel (26) lié à l'installation aéroportuaire,
- calcul d'une distance entre le contour de l'objet mobile équipé (22, 24) et l'obstacle,
- déclenchement d'une alerte si la distance calculée est inférieure à un seuil donné.

2. Procédé selon la revendication 1, **caractérisé en ce que** le contour est un cercle (31) dans lequel est inscrit l'objet mobile équipé (22, 24) et **en ce que** l'information lue dans l'unique marqueur (30) fixé à l'objet mobile équipé (22, 24) permet de déterminer le rayon dudit cercle.

3. Procédé selon la revendication 1, **caractérisé en ce qu'**il comprend les étapes de :
- détermination des positions en temps réel d'au moins deux marqueurs (30) fixés à l'objet mobile équipé (22, 24) dans le référentiel (26) lié à l'installation aéroportuaire (10),
- lecture des informations contenues dans chaque marqueur (30) fixé à l'objet mobile équipé (22, 24) afin de déterminer la position de chaque marqueur (30) dans un référentiel (33) lié à l'objet mobile équipé (22, 24),
- détermination de l'orientation et du contour réel (Cr) de l'objet mobile équipé (22, 24).

4. Procédé selon l'une des revendications précédentes, **caractérisé en ce que** l'étape de détermination des positions en temps réel de l'objet mobile équipé (22, 24) consiste à déterminer :
- la liste à chaque instant des marqueurs (30) fixés à l'objet mobile équipé (22, 24) présents dans le champ de lecture de chaque lecteur (32),
- des informations d'horodatage d'entrée et de sortie de chaque marqueur (30) dans les champs de lecture des différents lecteurs (32),
- par triangulation, la position de chaque marqueur (30) par rapport aux lecteurs (32),
- par changement de référentiel, la position de chaque marqueur (30) dans le référentiel (26) lié à l'installation aéroportuaire (10), la position de chaque lecteur (32) étant connue dans le référentiel (26) lié à l'installation aéroportuaire (10).

5. Procédé selon l'une des revendications 1 à 3, **caractérisé en ce que** l'étape de détermination des positions en temps réel de l'objet mobile équipé (22, 24) consiste à déterminer :
- des informations d'horodatage d'entrée et de sortie de chaque marqueur (30) fixé à l'objet mobile équipé (22, 24) dans le champ de lecture d'un lecteur mobile (32m),
- la position en temps réel du lecteur mobile (32m) dans le référentiel (26) lié à l'installation aéroportuaire (10),
- la position des marqueurs (30) par rapport au lecteur mobile (32m),
- par un changement de référentiel, la position de chaque marqueur (30) dans le référentiel (26) lié à l'installation aéroportuaire (10).

6. Procédé selon l'une des revendications 1 à 3, **caractérisé en ce que** l'étape de détermination des positions en temps réel de l'objet mobile équipé (22, 24) consiste à déterminer :
- la position de chaque marqueur (30) fixé à l'objet mobile équipé (22, 24) dans le référentiel (33) lié à l'objet mobile équipé (22, 24),
- la liste des marqueurs (30) fixés à l'objet mobile équipé (22, 24) présents dans le champ de lecture des lecteurs (32),
- par triangulation, la position de chaque marqueur (30) par rapport aux lecteurs (32),
- par un changement de référentiel, la position de chaque marqueur (30) dans le référentiel (26) lié à l'installation aéroportuaire (10), la position des lecteurs (32) étant connue dans le référentiel (26) lié à l'installation aéroportuaire (10).

7. Dispositif de détection de collisions entre un objet mobile équipé (22, 24) circulant sur une installation aéroportuaire (10) et au moins un obstacle dont la position est connue dans un référentiel (26) lié à l'installation aéroportuaire, le dispositif étant **caractérisé en ce qu'**il comprend :
- Au moins un marqueur (30) fixé à l'objet mobile équipé (22, 24) comprenant au moins un identifiant marqueur (30),
- Un réseau de lecteurs (32) déployés sur au moins une zone de l'installation aéroportuaire (10), chaque lecteur (32) ayant un champ de lecture et étant configuré pour collecter automatiquement au moins l'identifiant marqueur de chaque marqueur (30) présent dans son champ de lecture,
- une unité de traitement d'information (38) comprenant un logiciel configuré pour :
∘ déterminer la position en temps réel de l'objet mobile équipé (22, 24) dans le référentiel (26) lié à l'installation aéroportuaire (10),
∘ déterminer au moins un contour de l'objet mobile équipé (22, 24),
∘ calculer une distance entre le contour de l'objet mobile équipé (22, 24) et l'obstacle,
∘ déclencher une alerte si la distance calculée est inférieure à un seuil donné.

8. Dispositif selon la revendication 7 **caractérisé en ce que** chaque marqueur (30) fixé à un aéronef équipé est configuré pour fonctionner indépendamment d'une alimentation électrique de l'aéronef (22).

9. Dispositif selon la revendication 7 ou 8, **caractérisé en ce qu'**un aéronef équipé comprend au moins deux marqueurs (30) distants l'un de l'autre, les marqueurs (30) étant fixes à l'aéronef équipé et leurs positions connues dans un référentiel (26) lié à l'aéronef équipé.

10. Dispositif selon la revendication 9, **caractérisé en ce qu'**un aéronef équipé comprend des marqueurs à chacune des extrémités de la voilure et du fuselage de l'aéronef équipé.

11. Dispositif selon l'une des revendications 7 à 10, **caractérisé en ce qu'**il comprend une première base de données (40) qui répertorie chaque objet mobile équipé (22, 24) et qui associe, pour chaque objet mobile équipé (22, 24), un identifiant lié à l'objet mobile équipé (22, 24) et les identifiants marqueurs des marqueurs (30) fixés à l'objet mobile équipé (22, 24).

12. Dispositif selon l'une des revendications 7 à 11, **caractérisé en ce qu'**il comprend une deuxième base de données (42) qui répertorie des obstacles de l'installation aéroportuaire (10) et pour chacun des obstacles son contour et sa position dans le référentiel (26) lié à l'installation aéroportuaire (10).

13. Dispositif selon l'une des revendications 7 à 12, **caractérisé en ce qu'**il comprend une troisième base de données qui répertorie, pour chacun des lecteurs (32), la position du lecteur dans le référentiel (26) lié à l'installation aéroportuaire (10) et le rayon de lecture (32R) du lecteur.

14. Dispositif selon l'une des revendications 7 à 13, **caractérisé en ce qu'**il comprend un système de détermination d'une position en temps réel (29) configuré pour déterminer la position de chaque marqueur (30) dans le référentiel (26) lié à l'installation aéroportuaire (10).

15. Dispositif selon la revendication 14, **caractérisé en ce qu'**il comprend au moins un lecteur mobile (32m) associé à un moyen de positionnement pour déterminer la position en temps réel du lecteur mobile (32m) dans le référentiel (26) lié à l'installation aéroportuaire (10).
